# EUROPEAN PATENT APPLICATION

(11) **EP 4 844 921 A1**
(43) Date of publication of application: **25.11.2026**
(21) Application number: 25769360.6
(22) Date of filing: 10.03.2025
(51) Int. Cl.: H01M 50/244, H01M 50/249

(54) **BATTERY PACK CASE CONNECTING AND SEALING INTEGRATED STRUCTURE**

(30) Priority: 11.03.2024 CN 202420466051 U
(71) Applicant: Hefei Gotion High-Tech Power Energy Co., Ltd., Hefei, Anhui 230012 (CN)
(72) Inventor: CAO, Beibei, Hefei, Anhui 230012 (CN); LIU, Hao, Hefei, Anhui 230012 (CN); QIU, Meng, Hefei, Anhui 230012 (CN); YU, Canghai, Hefei, Anhui 230012 (CN); CI, Zhaoxin, Hefei, Anhui 230012 (CN); MA, Yinkun, Hefei, Anhui 230012 (CN)
(74) Representative: Betten & Resch
(86) International application number: PCT/CN2025/081490
(87) International publication number: WO 2025/190189

(57) **Abstract**

A battery pack case connecting and sealing integrated structure, including a battery pack case (1), wherein the battery pack case (1) includes a bottom guard plate (3), a liquid cooling plate (5) and a case frame (6); the case frame (6) and the liquid cooling plate (5) are riveted and locked by sealing rivet nuts (4); and the bottom guard plate (3) is connected to the sealing rivet nuts (4) by bolts (2). The bottom guard plate (3), the liquid cooling plate (5) and the case frame (6) in the battery pack case (1) are tightly connected by using the bolts (2) and the sealing rivet nuts (4), thereby providing a reliable connection and a sealing performance; meanwhile, the bolts (2) and the sealing rivet nuts (4) may be used on a large scale and have a uniform model, thereby being conducive to reducing the cost; and the bolts (2) cooperate with the sealing rivet nuts (4), and the liquid cooling plate (5) and the case frame (6) are riveted and locked by particular sealing rivet nuts (4) during assembly to form the case connecting and sealing integrated structure. Compared with the solutions of using hot-melt self-tapping screws in combination with adhesives or screwing rivet nuts in combination with sealing rings, such a process has higher efficiency and further reduces the cost.

## Description

### Technical Field

The present utility model belongs to the technical field of battery packs, and particularly relates to a battery pack case connecting and sealing integrated structure.

### Background

Electric vehicles are in a rapid development stage, and their extremely low use costs and advanced configurations are highly accepted by users. A power battery pack is one of core components of the electric vehicle, the safety of the power battery pack is critical, and a battery pack case plays an important role as a protective shell of the power battery pack, wherein the structural strength and waterproof performance are main reasons affecting the safety of the battery pack.

Existing liquid-cooled battery pack solutions may be divided into two types: the first type is to place a liquid cooling plate inside the battery pack case, and the second type is to place the liquid cooling plate at a bottom of the battery pack case. In the first battery pack solution, since the liquid cooling plate is arranged inside the battery case, the liquid cooling plate occupies a greater inner space of the case, such that an utilization rate of a battery cell arrangement space is low, and thus the state of charge of the battery pack is affected. In the second battery pack solution, since the liquid cooling plate is arranged at the bottom of the battery case, the liquid cooling plate occupies a smaller inner space of the case, such that the utilization rate of the battery cell arrangement space is high, and thus more states of charge can be arranged. However, in existing case bottom structure solutions, the liquid cooling plate is generally sealed and fixed by using hot-melt self-tapping screws in combination with adhesives or screwing rivet nuts in combination with sealing rings, such solutions have large investment on process cost and cost of parts and components. In the above solutions, no integration processing is performed on connecting and sealing structures, which is disadvantageous for the utilization rate of the battery cell space and the economical efficiency.

### Summary

In order to solve at least one of the problems in the background art, the present utility model provides a battery pack case connecting and sealing integrated structure.

In order to achieve the above objective, the present utility model uses the following technical solutions:
A battery pack case connecting and sealing integrated structure, including a battery pack case, wherein the battery pack case includes a bottom guard plate, a liquid cooling plate and a case frame;
the case frame and the liquid cooling plate are riveted and locked by sealing rivet nuts; and
the bottom guard plate is connected to the sealing rivet nuts by bolts.

In some embodiments, the liquid cooling plate is attached to the case frame, and a sealant is coated at an attachment position.

In some embodiments, second mating holes are formed in a surface of the liquid cooling plate for enabling the sealing rivet nuts to pass through;
third mating holes are formed in a surface of the case frame for enabling the sealing rivet nuts to pass through; and
each of the second mating holes and a corresponding third mating hole of the third mating holes are coaxially disposed.

In some embodiments, each of the sealing rivet nuts includes a rivet nut flange portion, a rivet nut sealing member and a rivet nut screw rod;
the rivet nut flange portion is used for compressing the liquid cooling plate and the case frame together;
the rivet nut sealing member is embedded into a stop portion on a lower surface of the rivet nut flange portion; and
the rivet nut screw rod is of an integrated structure with the rivet nut flange portion, and is located at a center of the rivet nut flange portion.

In some embodiments, the sealing rivet nut is provided with internal threads, and the internal threads extend along the rivet nut flange portion to an end of the rivet nut screw rod that is away from the rivet nut flange portion.

In some embodiments, a rivet nut stop portion is formed after riveting forming of the sealing rivet nut, and the rivet nut stop portion abuts against the case frame.

In some embodiments, a threaded column of each of the bolts cooperates with internal threads of a corresponding sealing rivet nut of the sealing rivet nuts, and a flange portion of the each of the bolts is used for locking and pressing the bottom guard plate.

In some embodiments, first mating holes are formed in a surface of the bottom guard plate, and the first mating holes arranged corresponding to the bolts (2) are used for enabling the bolts to pass through; and
the first mating holes and the second mating holes are coaxially disposed.

In some embodiments, a sealing stop region is further disposed on the bottom guard plate, and the sealing stop region is located on an inner side of each of the sealing rivet nuts;
the sealing stop region is provided with a bottom guard sealing member; and
the bottom guard sealing member is located between the bottom guard plate and the liquid cooling plate.

In some embodiments, a cooling flow channel region is located at a middle of the liquid cooling plate, and the bottom guard sealing member is located on an outer side of the cooling flow channel region.

The present utility model has beneficial effects as follows:
1. In the present utility model, the bottom guard plate, the liquid cooling plate and the case frame in the battery pack case are tightly connected by using the bolts and the sealing rivet nuts, thereby providing a reliable connection and a sealing performance; and meanwhile, the bolts and the sealing rivet nuts may be used on a large scale and have a uniform model, thereby being conducive to reducing the cost.
2. In the present utility model, the bolts cooperate with the sealing rivet nuts, and the liquid cooling plate and the case frame are riveted and locked by particular sealing rivet nuts during assembly, and the bolts lock the bottom guard plate at the particular sealing rivet nuts, so as to form the case connecting and sealing integrated structure, and to form a battery pack case solution as a whole in which the liquid cooling plate is arranged at the bottom of the battery case. Compared with the solutions of using hot-melt self-tapping screws in combination with adhesives or screwing rivet nuts in combination with sealing rings, such a process has higher efficiency and further reduces the cost.
3. In the present utility model, ribs are performed on the periphery of the bottom guard plate to form a defining space in combination with the liquid cooling plate, and a sealing member is padded to ensure the sealing performance and bottom thermal insulation performance between the bottom guard plate and the liquid cooling plate.

Other features and advantages of the present utility model will be set forth in the description below, and in part will become obvious from the description, or may be learned by implementing the present utility model. The objectives and other advantages of the present utility model may be implemented and obtained by the structures pointed out in the description and the drawings.

### Brief Description of the Drawings

In order to more clearly illustrate technical solutions in the embodiments of the present utility model or in the prior art, the drawings to be used in the description of the embodiments or the prior art will be simply introduced below. Apparently, the drawings in the following description are some embodiments of the present utility model. For those of ordinary skill in the art, other drawings may also be obtained according to these drawings without creative efforts.
Fig. 1 is a schematic diagram of a bottom of a battery pack case in the present utility model;
Fig. 2 is an exploded schematic diagram of the battery pack case in the present utility model;
Fig. 3 is a schematic diagram of an A-A sectional structure of the battery pack case in the present utility model;
Fig. 4 is a schematic diagram of a specific sealed rivet nut for the battery pack case in the present utility model;
Fig. 5 is a schematic diagram of a bottom of a liquid cooling plate of the battery pack case in the present utility model; and
Fig. 6 is a schematic diagram of the bottom of the liquid cooling plate of the battery pack case matching a sealing member in the present utility model.

In the figures: 1, battery pack case; 2, bolt; 3, bottom guard plate; 31, first mating hole; 32, sealing stop region; 4, sealing rivet nut; 41, rivet nut flange portion; 411, rivet nut flange stop portion; 42, rivet nut sealing member; 43, rivet nut stop portion; 44, rivet nut screw rod; 5, liquid cooling plate; 51, second mating hole; 6, case frame; 61, third mating hole; 7, bottom guard sealing member.

### Detailed Description of the Embodiments

In order to make the objectives, technical solutions and advantages of the embodiments of the present utility model clearer, the technical solutions in the embodiments of the present utility model will be clearly and completely described below in combination with the drawings in the embodiments of the present utility model. Apparently, the embodiments described below are merely a part, but not all, of the embodiments of the present utility model. All of other embodiments obtained by those of ordinary skill in the art based on the embodiments in the present utility model without any creative effort fall within the protection scope of the present utility model.

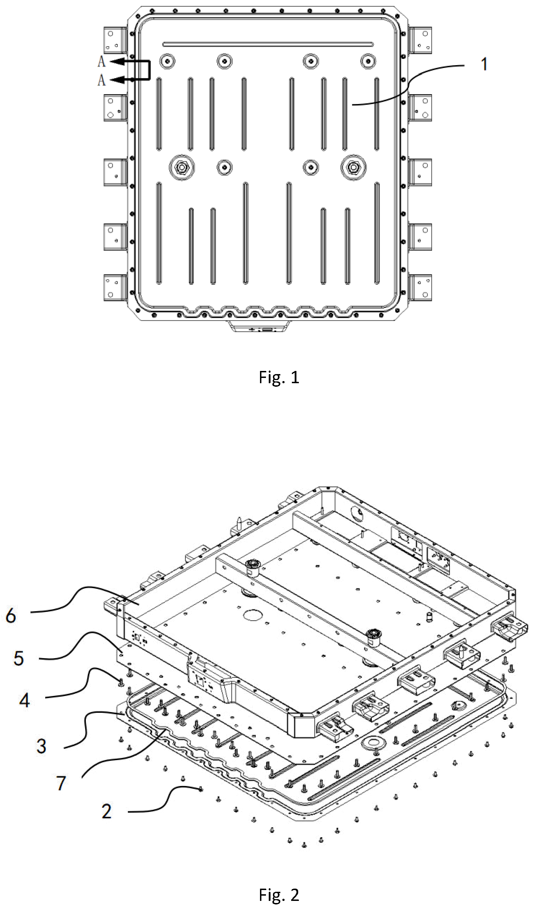

A battery pack case connecting and sealing integrated structure, as shown in Fig. 1 and Fig. 2, includes a battery pack case 1, and the battery pack case 1 includes a bottom guard plate 3, a liquid cooling plate 5 and a case frame 6. The case frame 6 and the liquid cooling plate 5 are riveted and locked by a plurality of sealing rivet nuts 4, and the bottom guard plate 3 is connected to and locked with the plurality of sealing rivet nuts 4 by a plurality of bolts 2, so as to form a solution as a whole in which the liquid cooling plate 5 is arranged at a bottom of the battery pack case 1.

In Fig. 2, the interior of the case frame 6 is an integrated region of parts and components of a battery pack, and plurality of cross beams are disposed therein to improve the structural strength of the case frame 6. Meanwhile, a plurality of screw holes, through holes or the like are also reserved inside the case frame 6, so as to reserve mounting positions for mounting the parts and components.

Further, the liquid cooling plate 5 is attached to the case frame 6, and a sealant is coated at the attachment position.

It should be noted that in some embodiments, other solutions may also be used to improve the sealing performance between the liquid cooling plate 5 and the case frame 6, for example, an annular groove is formed in an edge region of the liquid cooling plate 5, a sealing ring is then arranged in the annular groove, and then the sealing ring is compressed by the case frame 6, a sealing effect may also be achieved, or the sealing ring and the sealant are simultaneously used for sealing to further improve the sealing effect.

In some embodiments, second mating holes 51 are formed in a surface of the liquid cooling plate 5 for enabling the sealing rivet nuts 4 to pass through. Third mating holes 61 are formed in a surface of the case frame 6 for enabling the sealing rivet nuts 4 to pass through. The second mating holes 51 and the third mating holes 61 are arranged correspondingly, and each of the second mating holes 51 and a corresponding third mating hole 61 are coaxially disposed.

It should be noted that in the present embodiment, it is necessary to ensure that an aperture of each of the second mating holes 51 is greater than the corresponding sealing rivet nut 4 to absorb assembly tolerances of the parts and components.

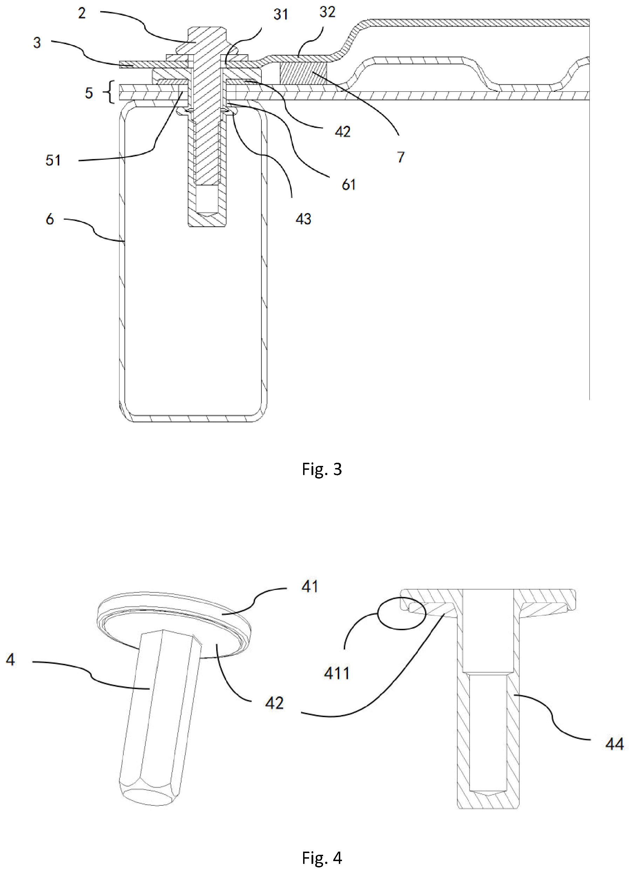

Further, as shown in Fig. 3 and Fig. 4, each of the sealing rivet nuts 4 includes a rivet nut flange portion 41, a rivet nut sealing member 42 and a rivet nut screw rod 44, wherein the rivet nut flange portion 41 is configured to compress the liquid cooling plate 5 and the case frame 6 together; the rivet nut sealing member 42 is embedded into a stop portion (i.e., a rivet nut flange stop portion 411 in Fig. 4) on a lower surface of the rivet nut flange portion 41; and the rivet nut screw rod 44 is of an integrated structure with the rivet nut flange portion 41, and is located at a center of the rivet nut flange portion 41. Meanwhile, the sealing rivet nut 4 is provided with internal threads, and the internal threads extend along the rivet nut flange portion 41 to an end of the rivet nut screw rod 44 that is away from the rivet nut flange portion 41. A rivet nut stop portion 43 is formed after riveting forming of the sealing rivet nut 4, and the rivet nut stop portion 43 abuts against the case frame 6.

It should be noted that the sealing rivet nuts 4 function to connect the liquid cooling plate 5 and the case frame 6, and meanwhile may be connected to the bolts 2 through the internal threads, so as to tightly connect the bottom guard plate 3, the liquid cooling plate 5 and the case frame 6.

In some embodiments, as shown in Fig. 3, a flange portion of the bolt 2 is used for pressing the bottom guard plate 3, and a gasket is disposed between the flange portion of the bolt 2 and the bottom guard plate 3; and a threaded column of the bolt 2 cooperates with the internal threads of the corresponding sealing rivet nut 4. In addition, first mating holes 31 are formed in a surface of the bottom guard plate 3, and the first mating holes 31 are used for enabling the bolts 2 to pass through. The first mating holes 31 and the second mating holes 51 are arranged in correspondence with each other, each of the first mating holes 31 and a corresponding second mating hole 51 are coaxially disposed. Meanwhile, a sealing stop region 32 is further disposed on the bottom guard plate 3, the sealing stop region 32 is located on the inner side of each of the sealing rivet nuts 4, and the sealing stop region 32 is provided with a bottom guard sealing member 7.

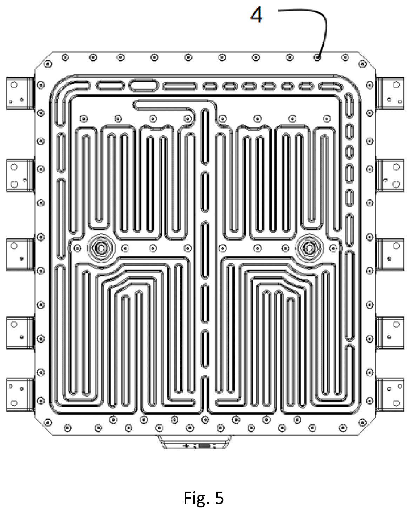

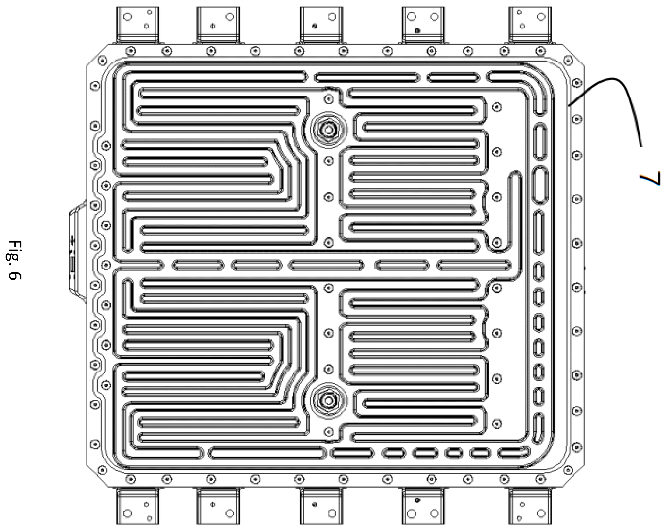

It should be noted that the liquid cooling plate 5 in Fig. 3 is of a double-layer structure, wherein a middle region is a cooling flow channel, therefore the position of the bottom guard sealing member 7 needs to avoid the cooling flow channel region. As shown in Fig. 5 and Fig. 6, the bottom guard sealing member 7 is located between the bottom guard plate 3 and the liquid cooling plate 5, and meanwhile is located between a region corresponding to the sealing rivet nuts 4 and the cooling flow channel region, that is, between the inner sides of all the rivet nuts 4 and the outer side of the cooling flow channel region.

Although the present utility model has been described in detail with reference to the foregoing embodiments, those of ordinary skill in the art should understand that modifications may still be made to the technical solutions recorded in the foregoing embodiments, or equivalent replacements may be made to some technical features; and these modifications or replacements do not make the essence of the corresponding technical solutions depart from the spirit and scope of the technical solutions of the embodiments of the present utility model.

## Claims

1. A battery pack case connecting and sealing integrated structure, comprising a battery pack case (1), wherein the battery pack case (1) comprises a bottom guard plate (3), a liquid cooling plate (5) and a case frame (6);
the case frame (6) and the liquid cooling plate (5) are riveted and locked by sealing rivet nuts (4); and
the bottom guard plate (3) is connected to the sealing rivet nuts (4) by bolts (2).

2. The battery pack case connecting and sealing integrated structure according to claim 1, wherein the liquid cooling plate (5) is attached to the case frame (6), and a sealant is coated at an attachment position.

3. The battery pack case connecting and sealing integrated structure according to claim 1, wherein second mating holes (51) are formed in a surface of the liquid cooling plate (5) for enabling the sealing rivet nuts (4) to pass through;
third mating holes (61) are formed in a surface of the case frame (6) for enabling the sealing rivet nuts (4) to pass through; and
each of the second mating holes (51) and a corresponding third mating hole (61) of the third mating holes are coaxially disposed.

4. The battery pack case connecting and sealing integrated structure according to claim 1, wherein each of the sealing rivet nuts (4) comprises a rivet nut flange portion (41), a rivet nut sealing member (42) and a rivet nut screw rod (44);
the rivet nut flange portion (41) is used for compressing the liquid cooling plate (5) and the case frame (6);
the rivet nut sealing member (42) is embedded into a stop portion on a lower surface of the rivet nut flange portion (41); and
the rivet nut screw rod (44) is of an integrated structure with the rivet nut flange portion (41), and is located at a center of the rivet nut flange portion (41).

5. The battery pack case connecting and sealing integrated structure according to claim 4, wherein the sealing rivet nut (4) is provided with internal threads, and the internal threads extend along the rivet nut flange portion (41) to an end of the rivet nut screw rod (44) that is away from the rivet nut flange portion (41).

6. The battery pack case connecting and sealing integrated structure according to claim 4, wherein a rivet nut stop portion (43) is formed after riveting forming of the sealing rivet nut (4), and the rivet nut stop portion (43) abuts against the case frame (6).

7. The battery pack case connecting and sealing integrated structure according to claim 4, wherein a threaded column of each of the bolts (2) cooperates with internal threads of a corresponding sealing rivet nut (4) of the sealing rivet nuts, and a flange portion of the each of the bolts (2) is used for locking and pressing the bottom guard plate (3).

8. The battery pack case connecting and sealing integrated structure according to claim 3, wherein first mating holes (31) are formed in a surface of the bottom guard plate (3), and the first mating holes (31) arranged corresponding to the bolts (2) are used for enabling the bolts (2) to pass through; and
the first mating holes (31) and the second mating holes (51) are coaxially disposed.

9. The battery pack case connecting and sealing integrated structure according to any one of claims 1-8, wherein a sealing stop region (32) is further disposed on the bottom guard plate (3), and the sealing stop region (32) is located on inner sides of the sealing rivet nuts (4);
the sealing stop region (32) is provided with a bottom guard sealing member (7); and
the bottom guard sealing member (7) is located between the bottom guard plate (3) and the liquid cooling plate (5).

10. The battery pack case connecting and sealing integrated structure according to claim 9, wherein a cooling flow channel region is located at a middle of the liquid cooling plate (5), and the bottom guard sealing member (7) is located on an outer side of the cooling flow channel region.
